(19) Europäisches Patentamt
European Patent Office
Office européen des brevets

(11) Veröffentlichungsnummer: **0 458 028 A1**

# (12) EUROPÄISCHE PATENTANMELDUNG

(21) Anmeldenummer: **91104272.9**

(22) Anmeldetag: **20.03.91**

(51) Int. Cl.[5]: **C08J 5/24**, C08K 7/02, //(C08L75/16,33:14)

(30) Priorität: **24.04.90 DE 4012946**

(43) Veröffentlichungstag der Anmeldung: **27.11.91 Patentblatt 91/48**

(84) Benannte Vertragsstaaten: **AT BE CH DE ES FR GB IT LI NL**

(71) Anmelder: **BASF Aktiengesellschaft**
**Carl-Bosch-Strasse 38**
**W-6700 Ludwigshafen(DE)**

(72) Erfinder: **Cramer, Edwin, Dr.**
**Hohenzollernstrasse 87 a**
**W-6700 Ludwigshafen(DE)**
Erfinder: **Folda, Thomas, Dr.**
**Pestalozzistrasse 40**
**W-6730 Neustadt(DE)**
Erfinder: **Zwecker, Joachim, Dr.**
**Moltkestrasse 18**
**W-6940 Weinheim(DE)**

## (54) Prepreg für Hochleitungsverbundwerkstoffe.

(57) Die Erfindung betrifft Prepregs für Hochleistungsverbundwerkstoffe aus einem Vinylesterurethanharz und gerichteten Verstärkungsfasern. Das Harz ist ein Reaktionsprodukt aus

A) einem polyfunktionellen Isocyanat,
gegebenenfalls
$B_1$) einem mehrwertigen Alkohol, und/oder
$B_2$) einem mehrwertigen Amin und
C) einem Hydroxyalkyl(meth-)acrylat,

welches weniger als 2 Gew.-% ungesättigter Monomerer und insbesondere praktisch kein Styrol enthält.

EP 0 458 028 A1

Die Erfindung betrifft radikalisch härtbare Prepregs für Hochleistungsverbundwerkstoffe aus einem im wesentlichen monomerenfreien Vinylesterurethanharz und gerichteten Verstärkungsfasern.

Hochleistungsverbundwerkstoffe finden in steigendem Maße Eingang in die Flugzeug- und Kraftfahrzeugindustrie. Hochbeanspruchte Teile wie z.B. Blattfedern werden bereits in technischem Maßstab aus Prepregs auf Basis von Epoxidharzen und gerichteten Glasfasergelegen hergestellt. Abgesehen von ihrem hohen Preis haben Epoxidharze jedoch den Nachteil verhältnismäßig langer Härtungszyklen; außerdem zeigen die gehärteten Verbundwerkstoffe eine unbefriedigend hohe Wasseraufnahme.

Der Erfindung lag also die Aufgabe zugrunde, Prepregs für Hochleistungsverbundwerkstoffe bereitzustellen, welche die genannten Nachteile nicht aufweisen. Diese Aufgabe wird gelöst durch Prepregs aus gerichteten Verstärkungsfasern und im wesentlichen monomerenfreien Vinylesterurethanharzen.

Gegenstand der Erfindung sind demzufolge radikalisch härtbare Prepregs für Hochleistungsverbundwerkstoffe, enthaltend 30 bis 70 Vol.% gerichteter Verstärkungsfasern und 70 bis 30 Vol.% eines Vinylesterurethanharzes, das hergestellt wurde durch Umsetzung von

A) einem polyfunktionellen Isocyanat,

gegebenenfalls

$B_1$) einem zweiwertigen Amin, und/oder

$B_2$) einem zweiwertigen Alkohol und

C) einem Hydroxyalkyl-(meth)acrylat,

wobei das Gewichtsverhältnis $A : (B_1 + B_2) = 100:0$ bis 100:30, vorzugsweise 100:5 bis 100:15 betrug, und das Harz höchstens 1 Gew.-% freie Isocyanatgruppen aufweist. Erfindungsgemäß enthält das Vinylesterurethanharz weniger als 2 Gew.-% ungesättigter Monomerer.

Monomerenhaltige Vinylesterurethane sind seit langem bekannt, z.B. aus US-A 3 297 745 und US-A 3,772,404. Die US-A 4 390 662 beschreibt Mischungen von ungesättigten Polyestern mit 0,5 bis 70 Gew.-% eines Acrylurethans auf Basis eines langkettigen Polyesterpolyols oder Polyetherpolyols, die gegebenenfalls auch monomerenfrei sein können. Derartige Harze sind nicht zur Herstellung von Hochleistungsverbundwerkstoffen geeignet, da infolge des hohen Gehalts an ungesättigten Polyestern die mechanischen Eigenschaften, insbesondere die Wärmeformbeständigkeit und die Festigkeit der Formstoffe viel zu niedrig wären.

In der US-A 4 131 602 ist die Umsetzung eines Triols oder Tetraols mit einem Diisocyanat und anschließende Reaktion mit einem Hydroxyacrylat beschrieben. Das Reaktionsprodukt kann als strahlungshärtbares überzugsmittel verwendet werden.

In der US-A 4 213 857 sind Umsetzungsprodukte eines Bisphenol A-Polyesterpolyols mit einem Polyisocyanat und einem hydroxyterminierten Acrylsäureester beschrieben. Diese Vinylesterurethane werden, in copolymerisierbaren Lösungsmitteln gelöst, als Überzugsmittel eingesetzt.

In der EP-A 64 809 ist ein Verfahren zur Herstellung eines Kunststoff-Formteils beschrieben, bei dem eine fließfähige Lösung eines Polyurethan-Polyacrylat-Harzes in monomerem Methylmethacrylat in eine Form eingespritzt wird. Abgesehen davon, daß diese Mischung große Mengen eines niedrigsiedenden Monomeren enthält, wäre sie aufgrund ihrer niedrigen Viskosität für die Tränkung von gerichteten Verstärkungsfasern und damit für die Herstellung von Hochleistungsverbundwerkstoffen nicht geeignet.

In der DE-A 37 44 390 sind Verbundwerkstoffe beschrieben aus Verstärkungsfasern und einem modifizierten Vinylesterurethanharz, welches ähnlich wie das Harz nach der vorliegenden Erfindung aufgebaut ist. Es unterscheidet sich von diesem im wesentlichen dadurch, daß es in mindestens 15 Gew.-% ungesättigter Monomerer, vorzugsweise in Styrol, gelöst ist. Derartige niedrigviskose Harze sind gut geeignet, lockere Fasermatten zu tränken, die bei DE-A 37 44 390 als Verstärkungsfasern bevorzugt sind. Zum Imprägnieren von gerichteten Verstärkungsfasern, wie sie bei Prepregs für Hochleistungsverbundwerkstoffe gefordert sind, sowie für die Weiterverarbeitung der Prepregs, wäre ihre Viskosität jedoch viel zu niedrig. Außerdem würde Styrol wegen seines hohen Dampfdrucks bei der Verarbeitung der Prepregs nach dem Autoklavenverfahren stören.

Zu den Ausgangsmaterialien ist folgendes zu sagen:

Verstärkungsfasern

Als Verstärkungsfasern kommen übliche anorganische oder organische Fasern, bevorzugt solche aus Glas, Kohlenstoff oder aromatischem Polyamid in Frage. Wesentlich ist, daß die Fasern gerichtet sind. Fasermatten kommen also nicht in Frage. Bevorzugt sind Fasergelege, insbesondere unidirektional orientierte Glasfasern, sowie Fasergewebe. Die erfindungsgemäßen Prepregs enthalten 30 bis 70, vorzugsweise 50 bis 60 Vol.% Verstärkungsfasern.

Isocyanate

Zur Herstellung der Vinylesterurethanharze im Sinne der Erfindung kommen alle bekannten aliphatischen, cycloaliphatischen und aromatischen Polyisocyanate mit mindestens 2 Isocyanatgruppen pro Molekül in Frage. Beispielhaft für geeignete Isocyanate seien genannt: 4,4-Diphenylmethan-diisocyanat (MDI), Hexamethylendiisocyanat, (HDI), Trimethylhexyl-diisocyanat (TMDI), Cyclohexyldiisocyanat, Dicyclopentadiendimethylen-diisocyanat, Diisocyanato-diphenylether, Diisocyanatonaphthalin, Diphenylmethan-diisocyanat und Diisocyanato-toluol mit ihren Isomerengemischen, Isophorondiisocyanat (IPDI), Dicyclohexyl-diisocyanat, Polyphenylenpolymethylen-polyisocyanate (Roh-MDI);
Triisocyanato-cyclohexan, Triisocyanato-toluol, Triisocyanato-naphthalin, Triisocyanatobiphenyl, Triisocyanato-trimethylbenzol, Triisocyanato-diphenylmethan, Triisocyanato-methyldiphenylmethan, Triisocyanato-triphenylmethan, Triisocyanato-diphenylether, Tetraisocyanato-diphenylsulfid;
urethangruppenhaltige, präpolymere Polyisocyanate wie z.B. das Reaktionsprodukt aus Trimethylolpropan und Diisocyanatetoluol;
trimerisierte, Isocyanuratgruppen enthaltende Polyisocyanate z.B. auf Basis HDI, Diphenylmethan-disocyanat und Isophorondiisocyanat;
präpolymere Polyisocyanate, die dargestellt werden durch Reaktion von Polyisocyanaten mit einem Unterschuß an Polyepoxiden in Gegenwart geeigneter Katalysatoren;
Polyisocyanate, die durch Vorreaktion eines Teils der NCO-Gruppen Carbodiimid- und Urethonimineinheiten enthalten;
sowie Präpolymere, die neben NCO-Gruppen Urethdioneinheiten enthalten.

Bevorzugte Isocyanate sind 4,4'-Diphenylmethandiisocyanat sowie das Isomerengemisch aus 2,2'- und 4,4'-Diphenylmethandiisocyanat.

Zweiwertige Amine

Als Diamine können sowohl aliphatische wie auch aromatische Amine eingesetzt werden. Beispielhaft seien genannt: Ethylendiamin, Diethylentriamin, Bis-(4-aminocyclohexyl)-methan, Diaminodiphenylmethan, Diaminodiphenylsulfon. Besonders geeignete Amine sind langkettige Amine mit Molekulargewichten von 150 bis 5000. Dazu zählen Etherdiamine wie 4,7-Dioxadecan-1,10-diamin oder Verbindungen der allgemeinen Formel

$H_2N-(C_3H_6O)_m-C_3H_6-NH_2$,

wobei m Zahlen von 2 bis 80 bedeutet, oder Verbindungen der allgemeinen Formel

$H_2N-C_3H_6-O-[(CH_2)_4O]_n-C_3H_6-NH_2$,

wobei n Zahlen von 5 bis 80 bedeutet; weiterhin die Aminobenzoesäureester und Anthranilsäureester von Diolen wie z.B. Ethylenglykol, Propylenglykol, Polyethylenglykol, Polypropylenglykol, Polybutadienglykol, Polycaprolactonglykol oder Polytetramethylenetherglykol. Die besonders bevorzugten Aminobenzoesäureester von Polytetramethylenetherglykol haben folgende Struktur:

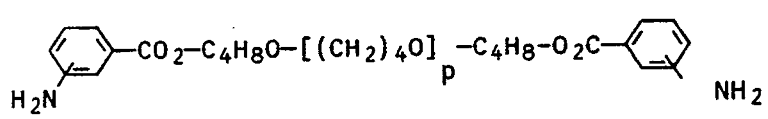

wobei p Zahlen von 5 bis 80 bedeutet.

Zweiwertige Alkohole

An zweiwertigen Alkoholen, die zur Umsetzung mit Isocyanaten geeignet sind, seien beispielhaft genannt: aliphatische Diole oder Polyetherole, vorzugsweise solche mit einem Molekulargewicht von weniger als 750, insbesondere weniger als 600, wie Ethandiol-1,2, Propandiol-1,2, Butandiol-1,4, Dipropylenglykol, Neopentylglykol, sowie Polyethylenglykol und Polypropylenglykol, oder alicyclische Diole, wie hydriertes Bisphenol A, Cyclohexandiol, Cyclohexandimethanol und Tricyclohexandimethanol, ferner Phenole wie Bisphenol A oder Resorcin, sowie alkoxylierte Derivate von Bisphenolen wie z.B. Bisphenol A, Bisphenol S oder Bisphenol F. Grundsätzlich können auch Aminole, wie Ethanolamin, Propanolamin, Diethanolamin, Triethanolamin und Aminophenole mit den Isocyanaten umgesetzt werden. Bevorzugt ist Dipropylenglykol, gegebenenfalls im Gemisch mit Polypropylenglykol.

Hydroxyalkyl-(meth-)acrylate

Zum Aufbau der endständigen Doppelbindungen im Vinylesterurethan werden Hydroxyalkyl-(meth-)acrylate mit den aus A, $B_1$ und $B_2$ hergestellten, Isocyanatgruppen enthaltenden Verbindungen umgesetzt. Hydroxyalkyl-(meth-)acrylate werden bevorzugt durch folgende allgemeine Formel beschrieben:

$$CH_2=\underset{\displaystyle R}{\underset{|}{C}}-CO_2-R'-OH$$

wobei R = H oder $CH_3$
und R' eine Alkylengruppe mit 2 oder 3 C-Atomen bedeuten. Hydroxyalkyl-(meth-)acrylate werden durch Umsetzung von (Meth-)Acrylsäure mit Alkylenoxiden wie Ethylen- oder Propylenoxid hergestellt. Geeignete Hydroxyalkyl-(meth-)acrylate im Sinne der Erfindung sind ferner Glycerindi(meth-)acrylate, Trimethylolpropandi(meth-)acrylate, Pentaerythrittri(meth-)acrylate. Bevorzugt sind Hydroxypropyl(meth-)acrylat und Hydroxyethyl(meth-)acrylat.

Monomere

Erfindungsgemäß enthält das Vinylesterurethanharz weniger als 2, vorzugsweise weniger als 1 Gew.-% Monomere mit einem Siedepunkt oberhalb von 200°C (bei 1013 mbar). Diese können zur gezielten Einstellung der Viskosität zugesetzt werden, wobei bevorzugt Di(meth)acrylate von Diolen oder Polyetherolen, niedermolekulare Maleinimide, wie z.B. N-Phenylmaleinimid, N-Alkylmaleinimide und N-Cyclohexylmaleinimide, sowie Diallylphthalat in Frage kommen. Wesentlich ist, daß das Harz praktisch frei von Monomeren mit niedrigerem Siedepunkt, insbesondere frei von Styrol ist.

Die erfindungsgemäß verwendeten Vinylesterurethanharze sollen eine verhältnismäßig hohe Viskosität aufweisen. Die Schmelzviskosität, gemessen mit einem Kegel/Platte-Viskosimeter nach Epprecht bei 100°C, soll vorzugsweise oberhalb von 50 mPas, insbesondere zwischen 200 und 2500 mPas liegen. Bei zu niedriger Viskosität fließt das Harz bei Raumtemperatur aus dem Prepreg heraus; bei zu hoher Viskosität besteht die Gefahr, daß bei der Faserimprägnierung Faserbruch auftritt. Die Einstellung der optimalen Viskosität kann durch geeignete Wahl des Molekulargewichts des Harzes (einstellbar über die Diole bzw. Diamine) erfolgen oder durch Zusatz von Thermoplasten oder Kautschuken, die reaktive Gruppen (z.B. COOH-, OH- oder $NH_2$-Gruppen) tragen können. Auch durch Zusatz geringer Mengen an Monomeren kann die Viskosität beeinflußt werden.

Zur Beschleunigung der Umsetzungen der Isocyanate mit den Alkohol- und Aminoverbindungen können geeignete Katalysatoren, wie sie aus der Polyurethanchemie bekannt sind, eingesetzt werden. Dazu zählen beispielsweise tertiäre Amine wie 1,2-Dimethylimidazol, Diazabicyclooctan, Diazabicyclononan, Triethylendiamin, Metallsalze wie Bleioctoat, Zinnoctoat oder Dibutylzinndilaurat sowie Mischungen von tertiären Aminen und Metallsalzen. Die Katalysatoren werden üblicherweise in Mengen von 0,05 bis 2 Gew.%, bezogen auf A + B + C zugegeben.

Eine vorzeitige Gelierung der Reaktionsmischung kann durch Zusatz üblicher Inhibitoren wie z.B. Phenothiazin, Hydrochinon, Dimethylhydrochinon, Trimethylhydrochinon, tert.-Butyl-hydrochinon, Hydrochinonmonomethylether, tert.-Butylbrenzkatechin, sowie Triphenylphosphit und p-Benzochinon verhindert werden. Die Inhibitoren werden in Mengen von 0,01 bis 2 Gew.% bezogen auf A + B + C zugesetzt.

Zur Herstellung der Vinylesterurethanharze sind verschiedene Verfahren möglich. Einmal kann zunächst das Isocyanat A mit einem Teil des Hydroxyalkyl-(meth)acrylats C im Molverhältnis von etwa 1:0,5 bis 1:1,5 vorreagiert und anschließend mit dem mehrwertigen Alkohol $B_2$ und/oder dem mehrwertigen Amin $B_1$ umgesetzt werden. Die freien NCO-Gruppen werden dann mit der Restmenge Hydroxyalkyl(meth)acrylat umgesetzt. In einem zweiten Verfahren werden die Komponenten A, B1 und ggf. B2 im Verhältnis A:(B1+B2) von 100:0 bis 100:30 vermischt und bei 40 bis 110°C umgesetzt. Anschließend wird die zur Absättigung der freien Isocyanatgruppen notwendige Menge den Hydroxyalkyl-(meth)acrylat C zugefügt. Eine weitere Möglichkeit besteht darin, die Komponenten A, B1, B2 und C gemeinsam in einer Eintopfreaktion zum Vinylesterurethanharz umzusetzen. Eventuell anwesendes, überschüssiges Polyisocyanat reagiert dabei mit dem Hydroxyalkyl(meth)acrylat zu einem niedermolekularen Vinylesterurethan, was zur Einstellung der Viskosität des Harzes ausgenutzt werden kann. Man erhält stets ein Gemisch präpolymerer Vinylesterurethane mit unterschiedlicher Kettenlänge und Molekulargewicht. Grundsätzlich ist auch das einfache Umsetzungsprodukt von 2 Mol Hydroxyalkyl(meth)acrylat mit 1 Mol Diisocyanat geeignet.

Dem Vinylesterurethanharz können in Mengen von 2 bis 20 %, bezogen auf sein Gewicht, andere härtbare Harze, wie Vinylester-, Bismaleinimid- oder Epoxid-Harze zugemischt werden. Zum Zweck der Zähmodifizierung kann das Vinylesterurethanharz 2 bis 20 %, bezogen auf sein Gewicht, eines Thermoplasten, wie Polyamid, Polyester und Polyethersulfon oder eines Kautschuks enthalten.

Die Vinylesterurethanharze werden nach dem Prepreg-Verfahren mit Verstärkungsfasern kombiniert. Dieses Verfahren ist z.B. in US-A 3 784 433, beschrieben. Man stellt dabei erst einen Vinylesterurethanharz-Film, dessen Flächengewicht vorzugsweise 10 bis 400 $g \cdot m^{-2}$ beträgt, her und legt auf diesen Film das Verstärkungsfasergelege und darauf gegebenenfalls wieder einen Harzfilm. Die Lagen werden mit Hilfe eines Kalanders bei Temperaturen zwischen 50 und 150 °C und Drücken zwischen 1 und 10 bar zu Prepregs verpreßt.

Diese Prepregs können in mehreren Lagen übereinanderdrapiert und nach üblichen Methoden verpreßt und radikalisch gehärtet werden. Dazu werden die Prepregs zurechtgeschnitten und parallel oder in verschiedenen Winkeln orientiert übereinanderdrapiert. Die Härtung erfolgt dann entweder in einem Autoklaven bei Drücken zwischen 2 und 10 bar oder in Pressen bei Drücken zwischen 10 und 100 bar. Die Temperatur beträgt in beiden Fällen 80 bis 200 °C.

Zur Aushärtung der Vinylesterurethanharze kommen übliche Polymerisationsinitiatorenin Frage, die dem Harz in Mengen von 0,1 bis 10 Gew.%, vorzugsweise von 0,5 bis 3 Gew.%, zugesetzt werden. Als Radikale liefernde Initiatoren seien beispielhaft genannt: Benzoylperoxid, tert.-Butylperoctoat, tert.-Butylperbenzoat, tert.-Butylperoxid, Dicumylperoxid, tert. Butylcumylperoxid, Di(4-methylbenzoyl)peroxid, Di(tert.-butyl)-peroxid oder organische Verbindungen mit einer labilen Kohlenstoff-Kohlenstoff-Bindung. Bei Verwendung üblicher Lichtinitiatoren, wie z.B. Benzoinether, Benzilketalen oder Acylphosphinverbindungen kann die Härtung alternativ durch Bestrahlen mit Licht der Wellenlänge 200 bis 50 nm durchgeführt werden.

Aus den erfindungsgemäßen Prepregs können Hochleistungsverbundwerkstoffe, wie z.B. Flugzeugteile, wie z.B. Seitenleitwerke und Rumpfschalen, Automobilteile, Maschinenteile oder Sportartikel, wie z.B. Tennisschläger oder Angelruten, hergestellt werden.

Ein weiterer Gegenstand der Erfindung sind Hochleistungsverbundwerkstoffe, aus 30 bis 70 Vol.% gerichteten Glasfasern und 70 bis 30 Vol.% eines gehärteten Vinylesterurethanharzes, welches praktisch keine einpolymerisierten Styroleinheiten enthält, gekennzeichnet durch folgende Eigenschaften: die interlaminare Scherfestigkeit ILS, gemessen nach der Sacma-Norm SRM 4-88 ist größer als 90, vorzugsweise größer als 100 [MPa], die 90 °-Zugfestigkeit, gemessen nach der Sacma-Norm SRM 8-88 ist größer als 50, vorzugsweise größer als 70 [MPa], die Glastemperatur Tg (nach DIN 29 971) ist höher als 130 °C, vorzugsweise höher als 150 °C.

## Beispiele

### A. Herstellung des Vinylesterurethanharzes

1. 300 g des Isomerengemisches von Diphenylmethandiisocyanat werden mit 1 ml Dibutylzinndilaurat versetzt und bei 40 °C werden 157 g Hydroxypropylmethacrylat zugetropft. Danach gibt man 15 g Dipropylenglykol zu, läßt die restlichen Isocyanatgruppen mit weiteren 157 g Hydroxypropylmethacrylat reagieren und rührt nach bis der Restisocyanatgehalt unter 0,1 % gesunken ist, werden 0,61 g Dicumylperoxid und 200 ppm eines phenolischen Inhibitors in das Harz (Viskosität 390 mPas bei 100 °C) eingerührt.
2. 325 g eines prepolymeren Diisocyanats auf Basis von 282 g 4,4'-Diphenylmethandiisocyanat, 27,1 g Dipropylenglykol und 15,9 g Polypropylenglykol (MG 450) werden mit 1 ml Dibutylzinndilaurat versetzt und bei 40 °C mit 260 g Hydroxypropylmethacrylat zur Reaktion gebracht. Dann wird 1 h bei 90 °C gerührt, mit 0,58 g Dicumylperoxid katalysiert und mit 200 ppm eines Phenols inhibiert. Die Viskosität des Harzes bei 100 °C beträgt 1700 mPas.
3. 2530 g des Isomerengemisches von Diphenylmethandiisocyanat werden mit 2 ml Dibutylzinndilaurat versetzt und bei 40 °c mit 940 g Bis-(para-aminobenzoesäureester)poly-tetrahydrofuran 650 umgesetzt. Danach gibt man 2760 g Hydroxypropyl-(meth)acrylat bei 50 °C zu, heizt die Mischung auf 70 °C auf und rührt 1 Stunde bei dieser Temperatur. Das Harz wird mit 400 ppm Dimethylhydrochinon und 31,3 g Dicumyloperoxid versetzt. Das Harz hat eine Schmelzviskosität (100 °C) von 480 mPas.

4. 3006 g des Isomerengemisches von Diphenylmethandiisocyanat werden mit 195 g eines Kautschuks auf Acrylatbasis (Paraloid EXL 2600) und 3,5 ml Dibutylzinndilaurat versetzt und bei 40-50 °C mit 1572 g Hydroxypropyl-(meth)acrylat zur Reaktion gebracht. Man gibt dann bei dieser Temperatur 151 g Dipropylenglykol zu, danach weitere 1572 g Hydroxypropyl-(meth)acrylat. Man versetzt mit 3 ml Dibutylzinndilaurat, 6,3 g Phenothiazin, 6,3 g Triphenylphosphit, heizt auf 80 °C auf und rührt 1 Stunde bei dieser Temperatur. Man kühlt auf 70 °C ab und versetzt mit 63 g Dicumylperoxid. Das Harz hat eine Viskosität von 340 mPas (Kegel/Platte-Viskosität bei 100 °C).

B1. Herstellung von Prepregs mit Glasfasern

Die Vinylesterurethanharze werden zunächst auf einem Labor-Coater zu einem Film auf silikonbeschichtetem Papier verarbeitet. Hierzu wird nach dem Gegenlauf-Verfahren mit Hilfe eines Spalts ein Harzflächengewicht von 140 $g \cdot m^{-2}$ eingestellt. Der Film wird dann mit einer Polyethylenfolie abgedeckt und aufgerollt.

Zur Weiterverarbeitung werden parallele Glasfaserrovings (PPG 1062-247) mit einem Flächengewicht von 560 $g \cdot m^{-2}$ nach der Zwei-Film-Arbeitsweise zwischen drei Kalandern bei Temperaturen von 60 bis 140 °C und Drücken von 1 bis 8 bar mit dem Harzfilm verpreßt. Der Harzfilm zieht dabei auf das Roving-Gelege auf. Das Prepreg wird dann mit silikonbeschichtetem Papier und einer Polyethylenfolie abgedeckt, aufgerollt und gelagert. Das Flächengewicht des Prepregs beträgt 840 $g \cdot m^{-2}$.

B2. Prepregs mit Kohlenstoffasern

Der Harzfilm (Flächengewicht 70 $g \cdot m^{-2}$) wird nach der Ein-Film-Arbeitsweise mit parallelen Kohlenstoffaserrovings (Celion G 30-500) mit einem Flächengewicht von 140 $g \cdot m^{-2}$ verpreßt. Das Prepreg-Flächengewicht beträgt 210 $g \cdot m^{-2}$, der Harzgehalt 33 Gew.-%.

C. Herstellung eines Verbundwerkstoffs

Die Prepregs werden auf das Maß 30x30 cm zurechtgeschnitten, 6 solcher Zuschnitte werden unidirektional übereinanderdrapiert und in einem Autoklaven gehärtet. Der Druck beträgt 6 bar, die Temperatur wird innerhalb von 8 h von 30 auf 190 °C gesteigert.

Die Laminate zeigen die in der Tabelle angegebenen Eigenschaften. Zum Vergleich ist ein Laminat auf Basis eines üblichen Epoxidharzes (Mischung aus Tetraglycidyldiaminodiphenylmethan + Bisphenol-A-Epoxid + Novolak-Epoxid + Dicyandiamid) mitaufgeführt.

Tabelle

| Harz | | A1 | A2 | A3 | A4 | Epoxid | A1 |
|---|---|---|---|---|---|---|---|
| Fasern | | B1 | B1 | B1 | B1 | B1 | B2 |
| ILS (trocken, 23°C) | [MPa] | 119 | 116 | 96 | 108 | 94 | 116 |
| Zugfestigkeit | [MPa] | 84 | 79 | 76 | - | 75 | - |
| Tg | [°C] | 178 | 182 | 175 | 186 | 185 | 178 |

**Patentansprüche**

1. Radikalisch härtbare Prepregs für Hochleistungsverbundwerkstoffe, enthaltend 30 bis 70 Vol.% gerichteter Verstärkungsfasern und 70 bis 30 Vol.% eines Vinylesterurethanharzes, das hergestellt wurde durch Umsetzung von
   A) einem polyfunktionellen Isocyanat,
   gegebenenfalls
   $B_1$) einem zweiwertigen Amin, und/oder
   $B_2$) einem zweiwertigen Alkohol und
   C) einem Hydroxyalkyl-(meth)acrylat,
   
   wobei das Gewichtsverhältnis A: $(B_1 + B_2)$ = 100:0 bis 100:30 betrug, und das Harz höchstens 1 Gew.-% freie Isocyanatgruppen aufweist, dadurch gekennzeichnet, daß das Vinylesterurethanharz weniger als

2 Gew.-% ungesättigte Monomere mit einem Siedepunkt oberhalb von 200 °C und keine Monomere mit niedrigerem Siedepunkt enthält.

2. Radikalisch härtbare Prepregs nach Anspruch 1, dadurch gekennzeichnet, daß das Vinylesterurethanharz 2 bis 20 Gew.%, bezogen auf sein Gewicht, eines härtbaren Harzes, eines Thermoplasten oder eines Kautschuks zugemischt enthält.

3. Radikalisch härtbare Prepregs nach Anspruch 1, dadurch gekennzeichnet, daß das Vinylesterurethanharz 0,1 bis 10 Gew.-% eines Peroxidinitiators enthält.

4. Hochleistungsverbundwerkstoffe, enthaltend

30 bis 70 Vol.% unidirektional orientierte Glasfasern 70 bis 30 Vol.% eines gehärteten Vinylesterurethanharzes,
welches

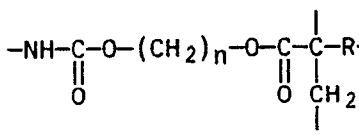
-Gruppen (mit $n = 2$ oder 3 und $R = H$ oder $CH_3$),

aber keine

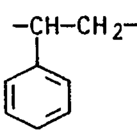
-Gruppen enthält,

gekennzeichnet durch folgende Eigenschaften:

| | |
|---|---|
| Interlaminare Scherfestigkeit ILS | > 90 [MPa] |
| 90 °-Zugfestigkeit | > 50 [MPa] |
| Glastemperatur | >130 °C |

Europäisches Patentamt

# EUROPÄISCHER RECHERCHENBERICHT

Nummer der Anmeldung

EP 91 10 4272

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-3 744 390 (BASF)<br>* Zusammenfassung; Patentanspruch; Seite 3, Zeile 65 - Seite 4, Zeile 5 *<br>- - - | 1 | C 08 J 5/24<br>C 08 K 7/02 //<br>(C 08 L 75/16<br>C 08 L 33:14 ) |
| A | US-A-4 758 400 (W.R. DUNNAVANT et al.)<br>* Ansprüche 1-4,6; Spalte 1, Zeilen 44-66 *<br>- - - - - | 1 | |
| | | | RECHERCHIERTE SACHGEBIETE (Int. Cl.5) |
| | | | C 08 J<br>C 08 K<br>C 08 F<br>C 08 G |

Der vorliegende Recherchenbericht wurde für alle Patentansprüche erstellt

| Recherchenort | Abschlußdatum der Recherche | Prüfer |
|---|---|---|
| Den Haag | 08 August 91 | VAN PUYMBROECK M.A. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument